# EUROPEAN PATENT APPLICATION

(11) **EP 3 358 647 A1**
(43) Date of publication of application: **08.08.2018**
(21) Application number: 16851386.9
(22) Date of filing: 26.09.2016
(51) Int. Cl.: H01M 2/20, H01M 2/10, H01R 13/629, H01R 31/08

(54) **INTER-BATTERY CONNECTION DEVICE AND INTER-BATTERY CONNECTION DEVICE ASSEMBLY**

(30) Priority: 02.10.2015 JP 2015197058
(71) Applicant: Tyco Electronics Japan G.K., Kawasaki-shi, Kanagawa 213-8535 (JP)
(72) Inventor: YAMANE, Tomokazu, Kawasaki-shi Kanagawa 213-8535 (JP); KONDO, Hiroki, Kawasaki-shi Kanagawa 213-8535 (JP)
(74) Representative: Johnstone, Douglas Ian
(86) International application number: PCT/JP2016/078157
(87) International publication number: WO 2017/057215

(57) **Abstract**

Provided are an inter-battery connection device and an inter-battery connection device assembly for establishing connection between electrode terminals of different batteries such that the connection between the electrode terminals can be reliably achieved with a small operating force and without losing an operation component used during the connecting operation between the electrode terminals from the batteries. The inter-battery connection device 1 establishes connection between electrode terminals 52, 53 of respective batteries 50 that are adjacent to one another. In the inter-battery connection device 1, each moving plates 30 is attached to a housing 10 so as to be movable between a temporary locking position and an actual locking position, the moving plates 30 becoming temporarily locked onto the housing 10 in the temporary locking position, and becoming actually locked onto the housing 10 in the actual locking position. Each of the moving plates 30 is provided with a clip part contact avoidance part 34 for avoiding that a clip part 21 enters in contact with either of the electrode terminals 52, 53 when the moving plate 30 is in the temporary locking position, and causing the clip part 21 to enter in contact with either of the electrode terminals 52, 53 when the moving plate 30 is in the middle of moving in the direction from the temporary locking position to the actual locking position.

## Description

### Technical Field

The present invention relates to an inter-battery connection device for connecting electrode terminals of batteries adjacent to each other and an inter-battery connection device assembly.

### Background Art

In recent years, a thin-plate-type battery using lithium ion cells or the like has been developed. A battery pack having a relatively large capacity can be constituted compactly by arranging a plurality of batteries of this type adjacent to one another along the thickness of batteries of this type. In that case, the plurality of batteries in the battery pack are electrically connected to one another in series and/or in parallel. The battery pack is used, for example, as a battery for driving an EV (electric vehicle), a HV (hybrid vehicle), or the like.

Conventionally, as an inter-battery connection device for arranging a plurality of batteries in parallel and interconnecting them, for example, one shown in PTL 1 has been known. The inter-battery connection device shown in PTL 1 is an inter-battery connection device constituted by arranging a plurality of batteries having electrode terminals protruding from a battery main body in parallel and interconnecting them. The inter-battery connection device is composed of a plurality of connectors connected to respective electrode terminals and a circuit board for mounting and holding the plurality of connectors and having output wirings electrically connecting the electrode terminals to one another in a desired connection system. Then, each connector is composed of contacts, a housing for holding the contacts, and a slider. The contacts are provided with elastic contact pieces protruding from one side of the housing and mounting portions protruding from the other side of the housing, and the housing has a slit for inserting the electrode terminal along the elastic contact pieces and guiding the same. Further, the circuit board has a through holes at portions corresponding to the electrode terminals, where a housing portion of the connector is mounted to the through holes and the mounting portion is connected to the output wirings.

The elastic contact pieces are pressed and driven to the side of the electrode terminals to be brought into contact with the electrode terminals by putting the slider on the elastic contact pieces along the elastic contact pieces of the contacts. Thereby, the electrode terminals of batteries adjacent to each other are brought into contact with each other through the connector and the circuit board. Thereby, the electrode terminals can be connected to each other without requiring large operation force during connection work between the electrode terminals.

### Citation List

### Patent Literature

PTL 1: JP2011-90812A

### Summary of Invention

### Technical Problem

However, the inter-battery connection device shown in the conventional PTL 1 has the following problem. That is, the slider for pressing and driving the elastic contact piece of each contact of the present invention is not attached to the housing of the connector. Therefore, there is a risk that the slider is lost during connection work between the electrode terminals, and connection between the electrode terminals cannot be performed when the losing occurs.

Accordingly, the present invention has been made in order to solve the conventional problem, and an object thereof is to provide an inter-battery connection device and an inter-battery connection device assembly for connecting electrode terminals of batteries adjacent to one another that can reliably achieve connection between the electrode terminals with small operation force without losing an operation part used during connection work time between the electrode terminals of the batteries.

### Solution to Problems

In order to achieve the above object, an inter-battery connection device according to one aspect of the present invention is an inter-battery connection device for connecting electrode terminals of batteries adjacent to each other, including a housing, a bus bar attached to the housing, and a movable member, characterized in that the bus bar is a conductive metal member for connecting two of the electrode terminals of the batteries adjacent to each other, and includes two clip portions for coming into contact with the two of the electrode terminals, respectively, and a coupling portion coupling the two clip portions to each other, wherein the movable member is attached to the housing so as to be movable between a temporary catching position and a final catching position, and is configured to temporarily catch the housing in the temporary catching position and is configured to finally catch the housing in the final catching position, and wherein the movable member is provided with a clip portion contact avoiding portion for avoiding contact of the clip portion with the electrode terminal when the movable member is in the temporary catching position and allowing the clip portion to come into contact with the electrode terminal in the course of movement of the movable member from the temporary catching position to the final catching position. In addition, an inter-battery connection device assembly according to another aspect of the present invention is an inter-battery connection device assembly provided with a plurality of the inter-battery connection devices described above, characterized in that the housings of inter-battery connection devices adjacent to each other in the plurality of the inter-battery connection devices are coupled to each other.

### Advantageous effect of Invention

According to the inter-battery connection device and the inter-battery connection device assembly according the present invention, since the movable member is attached to the housing so as to be movable between the temporary catching position and the final catching position, and is configured to temporarily catch the housing in the temporary catching position and is configured to finally catch the housing in the final catching position, the movable member serving as an operation part used during connection work between the electrode terminals of the batteries is prevented from being lost. Further, the movable member is provided with the clip portion contact avoiding portion which avoids contact of the clip portion with the electrode terminal when the movable member is in the temporary catching position and allows the clip portion to come into contact with the electrode terminal in the course of movement of the movable member from the temporary catching position to the final catching position. Therefore, the connection between the electrode terminals can be achieved with small operation force. Accordingly, the inter-battery connection device for connecting electrode terminals of batteries adjacent to each other and the inter-battery connection device assembly, which can reliably achieve the connection between the electrode terminals with small operation force without losing an operation part used during connection work between the electrode terminals, can be provided.

### Brief Description of Drawings

Figure 1 is an isometric view showing a plurality of batteries being electrically connected to one another in series using an inter-battery connection device assembly provided with a plurality of inter-battery connection devices according to an embodiment of the present invention;
Figure 2 is an isometric view of a battery;
Figure 3 is an isometric view of each inter-battery connection device shown in Figure 1 as viewed from a top side thereof;
Figure 4 is an isometric view of each inter-battery connection device shown in Figure 1 as viewed from a bottom side thereof;
Figure 5 is an exploded isometric view of each inter-battery connection device shown in Figure 1 as viewed from the bottom side thereof;
Figure 6 is an isometric view of a housing of each inter-battery connection device shown in Figure 1 as viewed from the top side thereof;
Figure 7 is an isometric view of the housing of each inter-battery connection device shown in Figure 1 as viewed from the bottom side thereof;
Figure 8 is an isometric view of a bus bar of each inter-battery connection device shown in Figure 1;
Figure 9 is an isometric view of a moving plate of each inter-battery connection device shown in Figure 1;
Figure 10 is a cross sectional isometric view taken along line 10 - 10 in Figure 9;
Figure 11 is a cross sectional view taken along line 11 - 11 in Figure 9;
Figure 12 is a cross sectional isometric view showing each moving plate being in a temporary catching position in each inter-battery connection device shown in Figure 1;
Figure 13 is a cross sectional front view showing each moving plate being in the temporary catching position in each inter-battery connection device shown in Figure 1;
Figure 14 is a cross sectional isometric view showing each moving plate being in the temporary catching position in each inter-battery connection device shown in Figure 1;
Figure 15 is a cross sectional front view showing each moving plate being in the temporary catching position in each inter-battery connection device shown in Figure 1;
Figure 16 is an isometric view for illustrating a method for coupling two inter-battery connection devices adjacent to each other;
Figure 17 is an isometric view of an inter-battery connection device assembly where a plurality of inter-battery connection device are coupled to one another;
Figure 18 is a view for illustrating a method for electrically connecting a plurality of batteries to one another in series using the inter-battery connection device assembly and shows each electrode terminal being about to be inserted into each clip portion;
Figure 19 is a view for illustrating a method for electrically connecting the plurality of batteries to one another in series using the inter-battery connection device assembly and shows the moving plate being in the temporary catching position and each electrode terminal having been inserted into each clip portion;
Figure 20 is a cross sectional enlarged view of a portion shown by arrow 20 in Figure 19;
Figure 21 is a view for illustrating a method for electrically connecting the plurality of batteries to one another in series using the inter-battery connection device assembly and shows the moving plate being in a final catching position and each clip portion in contact with each electrode terminal; and
Figure 22 is a cross sectional enlarged view of a portion shown by arrow 22 in Figure 21.

### Description of Embodiments

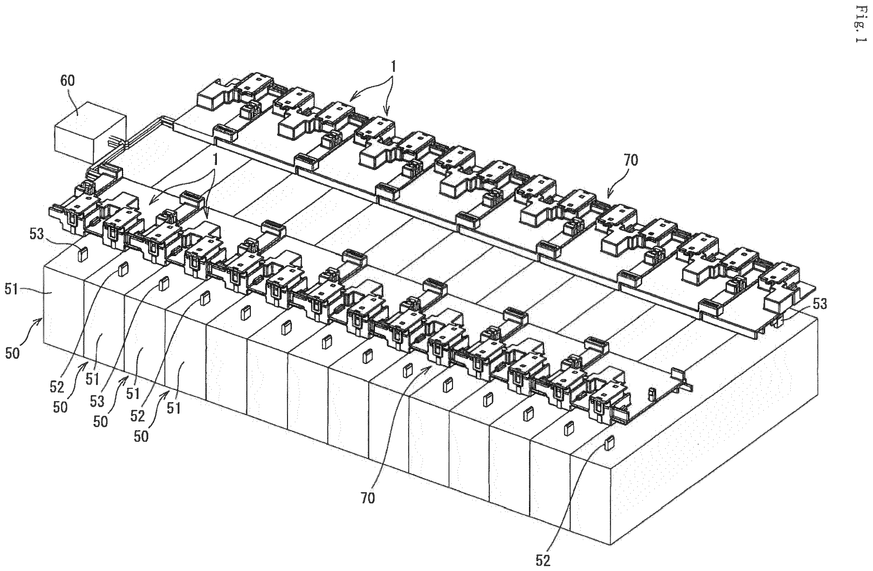

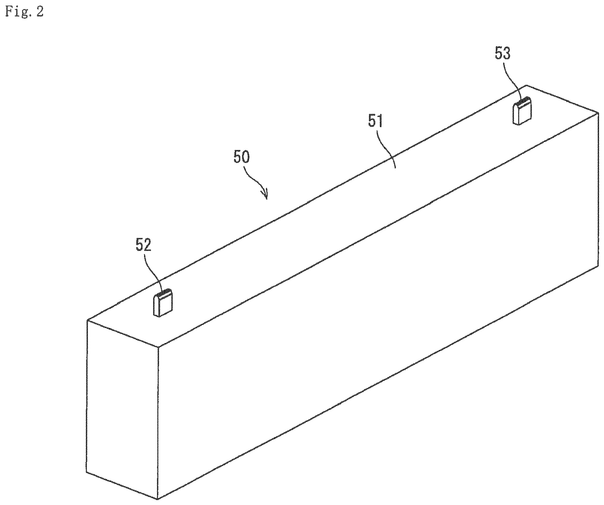

An embodiment of the present invention will be described below with reference to the drawings. Figure 1 shows a plurality of batteries 50 being electrically connected to one another in series using an inter-battery connection device assembly 70 provided with a plurality of inter-battery connection devices 1 according to an embodiment of the present invention. Here, the plurality of batteries 50 are electrically connected to one another in series to constitute a battery pack, and the battery pack is used, for example, in a high-voltage battery for an EV (electric vehicle) or a HV (hybrid vehicle). A first electrode terminal (positive electrode) 52 (see Figure 2) of a battery 50 positioned at one end (left end in Figure 1) of the plurality of batteries 50 electrically connected to one another in series is connected to a second electrode terminal (negative electrode, not shown) of another battery (not shown) via a connector 60. Further, a second electrode terminal (negative electrode) 53 of a battery 50 positioned at the other end (right end in Figure 2) of the plurality of batteries 50 electrically connected to one another in series is connected to a controller (not shown). As shown in Figure 2, each battery 50 is provided with a rectangular flat plate-type battery main body 51, the first electrode terminal (positive electrode) 52 protruding from one side of an upper face of the battery main body 51, and the second electrode terminal (negative electrode) 53 protruding from another side of the upper face of the battery main body 51. The first electrode terminal 52 and the second electrode terminal 53 are each constituted of a male-type tab terminal.

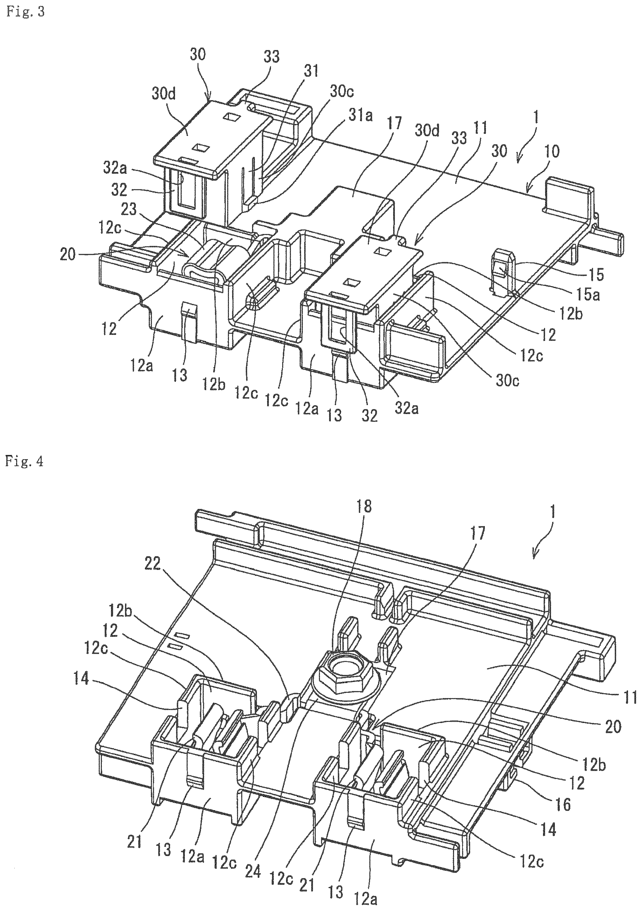

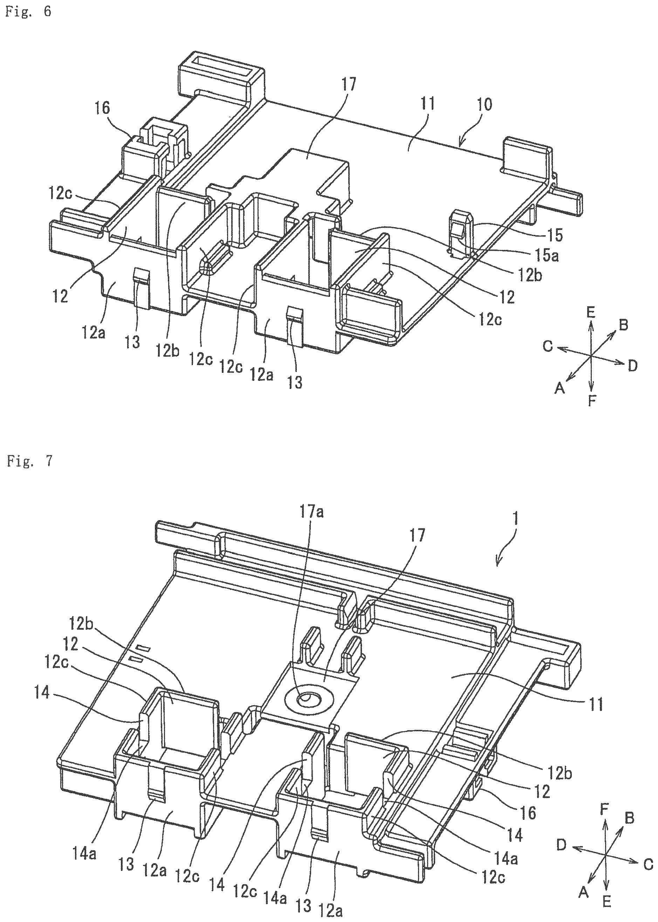

Here, as shown in Figure 1, each inter-battery connection device 1 is for connecting the first electrode terminal 52 and the second electrode terminal 53 of the batteries 50 adjacent to each other. As shown in Figure 3 to Figure 5, each inter-battery connection device 1 is provided with a housing 10, a bus bar 20 attached to the housing 10, and two moving plates (movable members) 30. As shown in Figures 6 and Figure 7, the housing 10 is provided with a housing main body 11. The housing 10 is formed by molding an insulation synthetic resin. As shown in Figure 6 and Figure 7, the housing main body 11 is constituted in an approximately rectangular parallelepiped shape extending in frontward and rearward directions shown by arrows AB, in leftward and rightward directions shown by arrow CD perpendicular to the frontward and backward directions, and in upward and downward directions shown by arrows EF perpendicular to the frontward and backward directions and the leftward and rightward directions. Here, the arrow A shows the frontward direction, the arrow B shows the rearward direction, the arrow C shows the leftward direction, the arrow D shows the rightward direction, the arrow E shows the upward direction, and the arrow F shows the downward direction, and the following description in the present specification will be made on the basis of these directions.

As shown in Figure 6 and Figure 7, a pair of left and right clip portion receiving portions 12 are provided on a front side of the housing main body 11. Each clip portion receiving portions 12 is formed in an open-topped and open-bottomed rectangular prismatic shape provided with a front wall 12a, a rear wall 12b, and a pair of left and right side walls 12c coupling these front wall 12a and rear wall 12b. Each clip portion 21 described later of the bus bar 20 is received in each clip portion receiving portion 12.

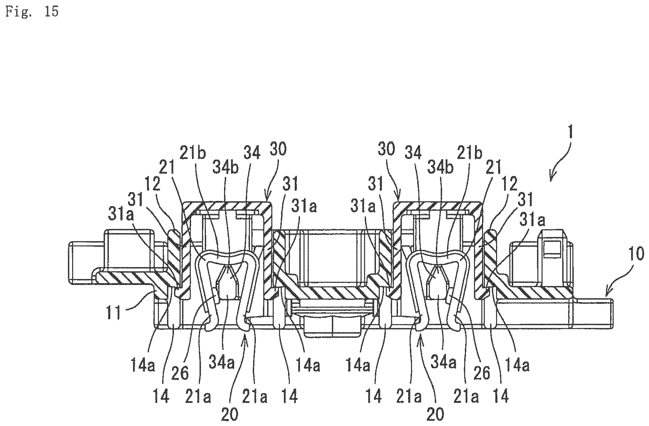

Further, as shown in Figure 6 and Figure 7, a catching protrusion 13 is provided at an approximately central portion of the front wall 12a of each clip portion receiving portion 12 in the upward and downward directions. Further, as shown in Figure 7, a notch 14 extending upwardly from a lower edge of each side wall 12c is formed in each of the side walls 12c of each clip portion receiving portion 12. As shown in Figure 15, an upper end of each notch 14 constitutes a movement restraining end 14a for restraining upward movement of a temporary catching protrusion 31a of a temporary catching arm 31 described later of the moving plate 30.

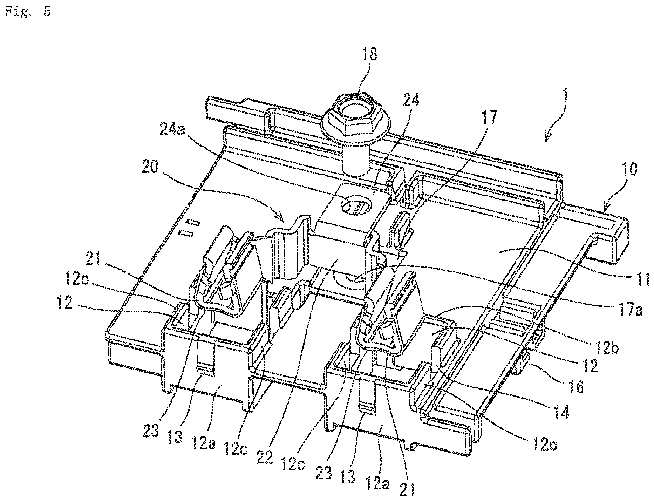

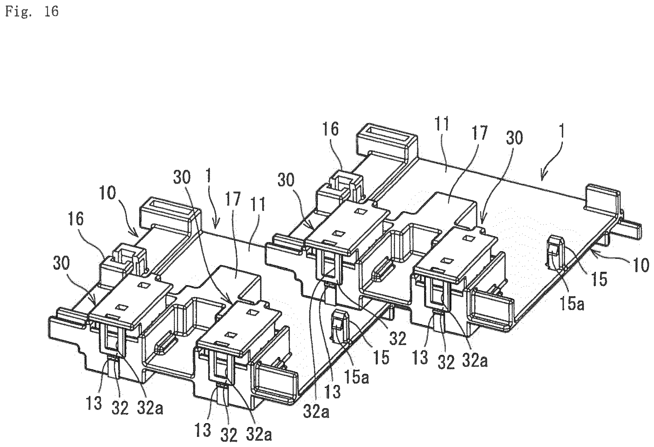

In addition, as shown in Figure 6, a coupling post 15 is provided in a standing manner in the vicinity of an approximately central right edge of the upper face of the housing main body 11 in the frontward and rearward directions, and a coupling post receiving portion 16 is provided in the standing manner in the vicinity of an approximately central left edge of the upper face of the housing main body 11 in the frontward and rearward directions. An engagement protrusion 15a is provided on an upper portion of a front face of the coupling post 15. As shown in Figure 16, when the inter-battery connection devices 1 adjacent to each other are coupled to each other, the coupling post 15 gets into the coupling post receiving portion 16 of the adjacent inter-battery connection device 1 from below. Then, the engagement protrusion 15a engages with the coupling post receiving portion 16. Thereby, the inter-battery connection device 1 and the inter-battery connection device 1 adjacent thereto are coupled to each other. Further, as shown in Figure 6 and Figure 7, a bus bar attaching portion 17 is provided at an approximately central portion of the housing main body 11 in the frontward and rearward directions and in the leftward and rightward directions. A female screw portion 17a is formed in the bus bar attaching portion 17. As shown in Figure 4 and Figure 5, an attaching plate portion 24 described latter of the bus bar 20 is attached to the bus bar attaching portion 17 by an attaching screw 18.

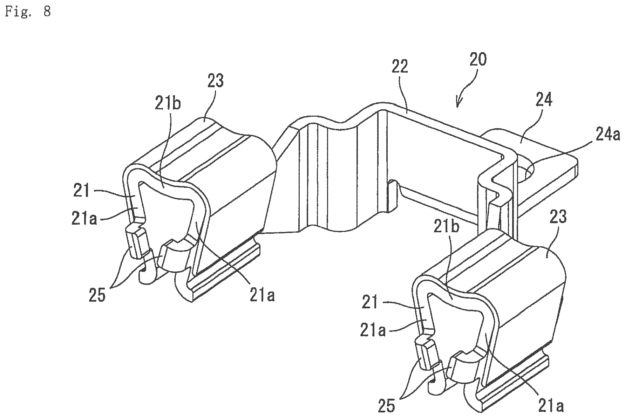

Next, the bus bar 20 is a conductive metal member for connecting the first electrode terminal 52 and the second electrode terminal 53 of the batteries 50 adjacent to each other, and it is formed by stamping and forming a conductive metal plate. As shown in Figure 5 and Figure 8, the bus bar 20 is provided with two clip portions 21 for coming into contact with the first electrode terminal 52 and the second electrode terminal 53, respectively, and a coupling portion 22 coupling these clip portions 21. Each clip portion 21 is provided with a pair of elastic contact arms 21a and a top plate portion 21b coupling the pair of elastic contact arms 21a. The top plate portion 21b gives elasticity to each elastic contact arm 21a. The pair of elastic contact arms 21a receive and come into contact with one of the first electrode terminal 52 and the second electrode terminal 53 constituted of a male-type tab terminal therebetween. The coupling portion 22 couples inner elastic contact arms 21a of the two clip portions 21 to each other. An attaching plate portion 24 is formed at a lower edge of a central portion of the coupling portion 22 in a bending manner. As shown in Figure 5, the attaching plate portion 24 is formed with a through hole 24a into which a screw shaft of the attaching screw 18 is inserted.

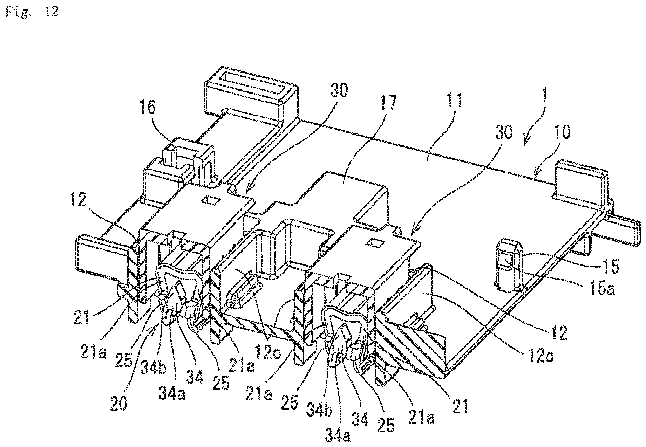

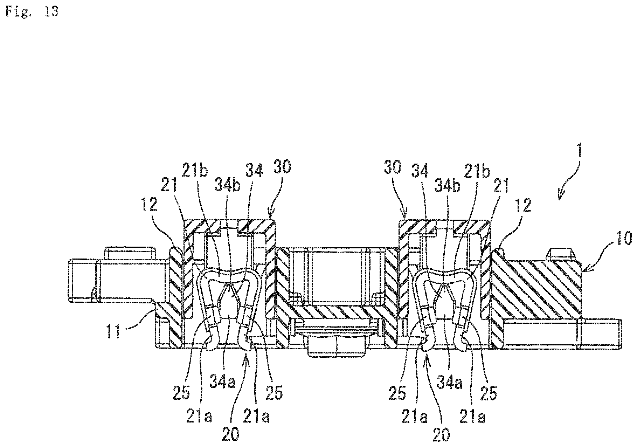

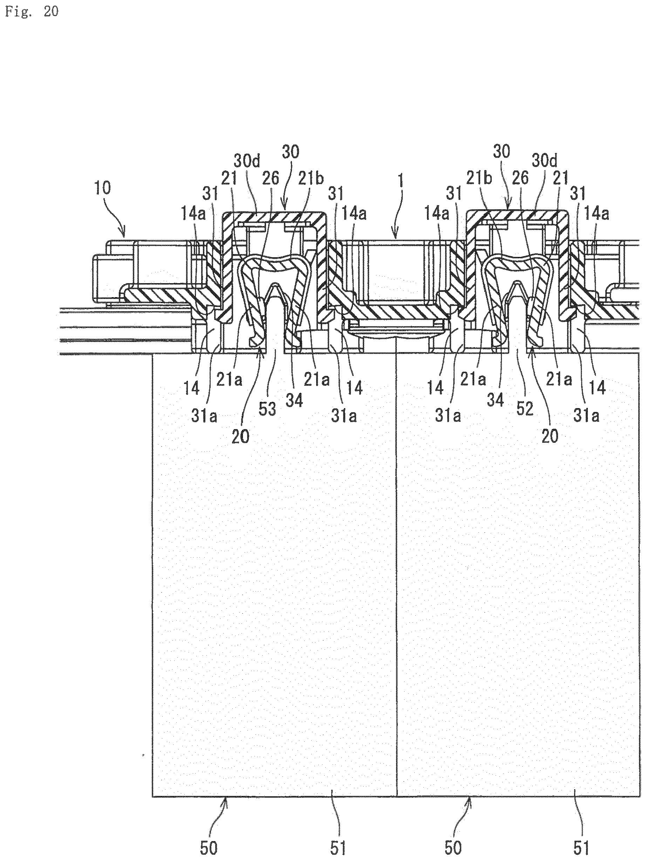

Further, as shown in Figure 8, a reinforcement leaf spring 23 is fitted to each clip portion 21 of the bus bar 20 so as to cover an outer periphery of each clip portion 21. In addition, as shown in Figure 8, a pair of first engagement protrusions 25 protruding frontward are provided at respective side edges of front sides of the pair of elastic contact arms 21a. As shown in Figure 12 and Figure 13 described later, a clip portion contact avoiding portion 34 gets into between the first engagement protrusions 25 when the moving plate 30 is in a temporary catching position, as described latter. Thereby, a distance between the pair of elastic contact arm 21a is expanded, which results in avoidance of contact of the pair of elastic contact arms 21a with the first electrode terminal 52 or the second electrode terminal 53, as shown in Figure 20.

Furthermore, as shown in Figure 15, a second engagement protrusion 26 protruding rearward is provided at a side edge of a rear side of an outer elastic contact arm 21a of the pair of elastic contact arms 21a. When the moving plate 30 is in the temporary catching position, as shown in Figure 15, the clip portion contact avoiding portion 34 presses the second engagement protrusion 26 outward from inside of the second engagement protrusion 26. Thereby, the outer elastic contact arm 21a is displaced outward to assist expansion of the distance between the pair of elastic contact arms 21a.

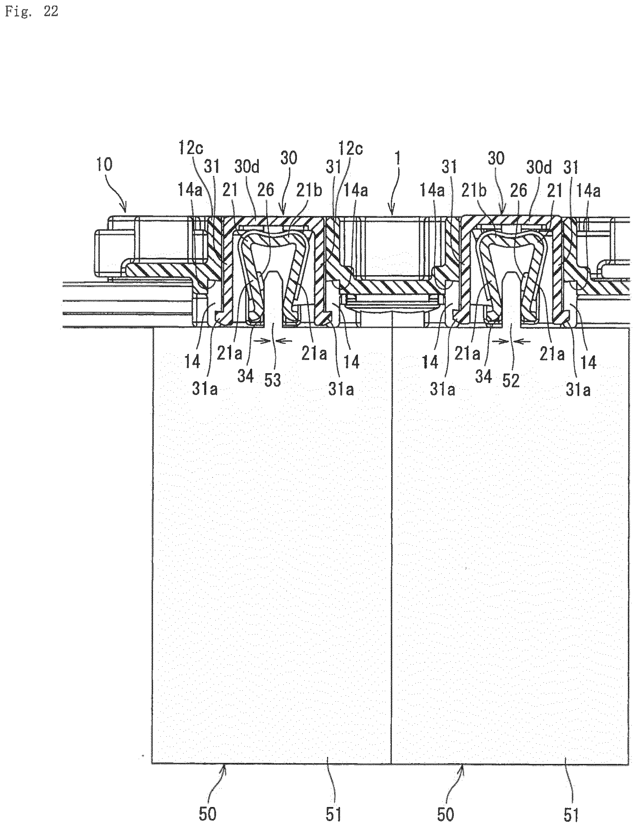

Then, as shown in Figure 4 and Figure 5, the bus bar 20 is attached to the housing 10 by the attaching screw 18 such that each clip portion 21 is received in each clip portion receiving portion 12 of the housing 10. Next, each moving plate 30 is attached in each clip portion receiving portion 12 of the housing 10 so as to be movable between the temporary catching position (see Figure 3, Figure 12 to Figure 15, and Figure 20) and a final catching position (see Figure 22). Each moving plate 30 is allowed to temporarily catch each clip portion receiving portion 12 of the housing 10 in the temporary catching position and it is allowed to finally catch each clip portion receiving portion 12 of the housing 10 in the final catching position.

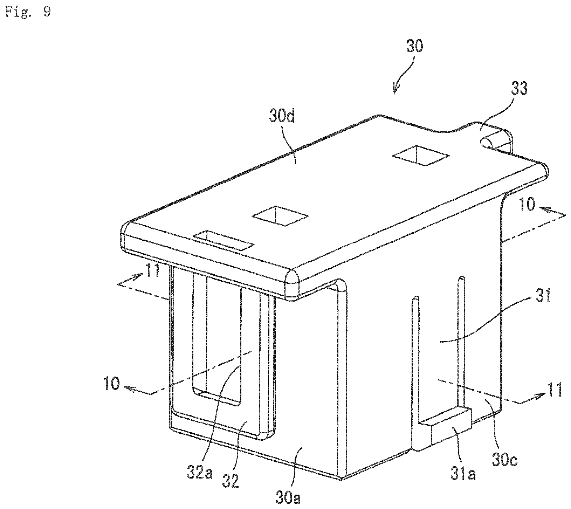

A configuration of each moving plate 30, and the temporary catching and the final catching will be described specifically. As shown in Figure 9 to Figure 11, each moving plate 30 is formed in an approximately rectangular parallelepiped shape having a front wall 30a, a rear wall 30b, a pair of side walls 30c and a top wall 30d. As shown in Figure 3, the front wall 30a, the rear wall 30b, and the pair of side walls 30c are received in the clip portion receiving portion 12 so as to be movable in the upward and downward directions. Then, a portion of the top wall 30d protruding forward from the front wall 30a abuts on an upper edge of the front wall 12a of the clip portion receiving portion 12 and a protrusion portion 33 protruding rearward from the top wall 30d abuts on an upper edge of the rear wall 12b of the clip portion receiving portion 12, which results in restraint of downward movement of the moving plate 30. At this time, it should be noted that the heights of the front wall 12a, the rear wall 12b and both the side walls 12c of the clip portion receiving portion 12 and the thicknesses of the top wall 30d and the protrusion portion 33 of the moving plate 30 are set such that upper faces of the front wall 12a, the rear wall 12b and both the side walls 12c of the clip portion receiving portion 12 are flush with an upper face of the moving plate 30.

Then, a pair of cantilever-type temporary catching arms 31 having upper ends as fixed ends and capable of displacing in the leftward and rightward directions are provided on both the side walls 30c of the moving plate 30, respectively. The temporary catching protrusion 31a protruding outward is provided at a lower end of each temporary catching arm 31. Further, a final catching arm 32 extending downward is provided at a portion of the moving plate 30 protruding frontward from the front wall 30a. The final catching arm 32 is formed with a final catching hole 32a elongated in the upward and downward directions. Each moving plate 30 is formed by molding synthetic resin.

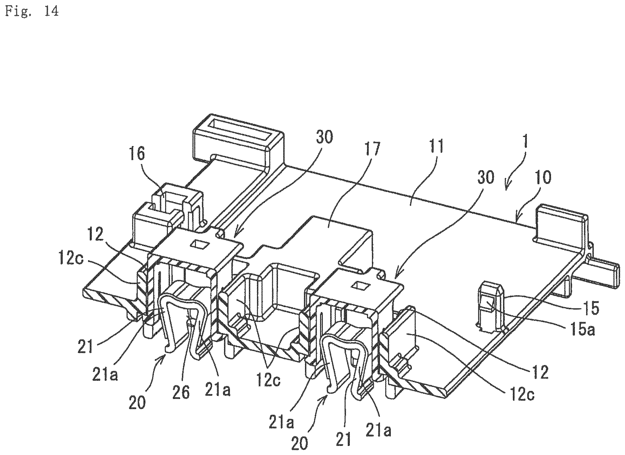

Then, when the moving plate 30 is received in the clip portion receiving portion 12 and is in the temporary catching position, as shown in Figure 3, the lower edge of the final catching arm 32 abuts on the catching protrusion 13 of the clip portion receiving portion 12. Thereby, downward movement of the moving plate 30 is restrained. Further, when the moving plate is in the temporary catching position, as shown in Figure 14, Figure 15 and Figure 20, the temporary catching protrusion 31a of each temporary catching arm 31 engages with the movement restraining end 14a of the notch 14 formed in each side wall 12c of the clip portion receiving portion 12. Thereby, upward movement of the moving plate 30 is restrained so that the moving plate 30 is temporarily caught in the clip portion receiving portion 12 in the temporary catching position.

Further, when the moving plate 30 is in the final catching position, the catching protrusion 13 of the clip portion receiving portion 12 gets into the final catching hole 32a of the final catching arm 32, which results in restraint of upward movement of the moving plate 30. Furthermore, as described previously, a portion of the top wall 30d of the moving plate 30 protruding forward from the front wall 30a abuts on the upper edge of the front wall 12a of the clip portion receiving portion 12. Furthermore, the protrusion portion 33 protruding rearward from the top wall 30d abuts on the upper edge of the rear wall 12b of the clip portion receiving portion 12. Thereby, downward movement of the moving plate 30 is restrained so that the moving plate 30 is caused to be finally caught in the clip portion receiving portion 12 in the final catching position. It should be noted that when the moving plate 30 is in the final catching position, as shown in Figure 22, the upper faces of the front wall 12a, the rear wall 12b and both the side walls 12c of the clip portion receiving portion 12 are flush with the upper face of the moving plate 30.

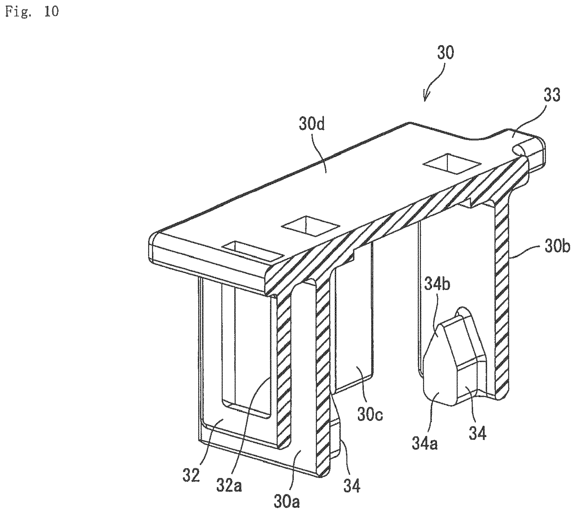

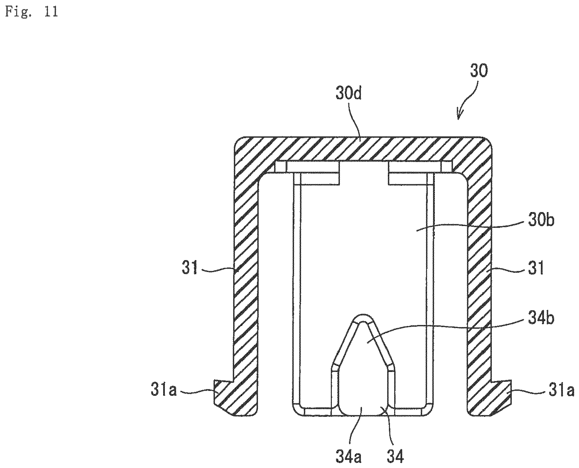

Then, as shown in Figure 10 and Figure 11, a pair of clip portion contact avoiding portions 34 opposed to each other are provided on respective inner faces of the front wall 30a and the rear wall 30b of each moving plate 30. Each clip portion contact avoiding portion 34 is formed as a protrusion protruding inward from each of the inner faces of the front wall 30a and the rear wall 30b and extending in the upward and downward directions. Each clip portion contact avoiding portion 34 is provided with an approximately rectangular first avoiding portion 34a located at a lower side of each of the inner face of the front wall 30a and the rear wall 30b and a mountain-shaped second avoiding portion 34b tapering upward from the first avoiding portion 34a. The width of the first avoiding portion 34a is larger than the plate thickness of the first electrode terminal 52 and the second electrode terminal 53 constituted of a tab terminal.

Then, when the moving plate 30 is in the temporary catching position, as shown in Figure 12 and Figure 13, the first avoiding portion 34a of the clip portion contact avoiding portion 34 provided on the front wall 30a gets in between the first engagement protrusions 25. Thereby, the distance between the pair of the elastic contact arms 21a is expanded, which results in avoidance of contact of the pair of elastic contact arms 21a with the first electrode terminal 52 or the second electrode terminal 53, as shown in Figure 20.

Further, the first avoiding portion 34a of the clip portion contact avoiding portion 34 provided on the front wall 30a gets out from between the first engagement protrusions 25 in the course of movement of the moving plate 30 from the temporary catching position to the final catching position. Thereby, the distance between the pair of elastic contact arms 21a is narrowed, which results in contact of the pair of elastic contact arms 21a with the first electrode terminal 52 or the second electrode terminal 53. On the other hand, when the moving plate 30 is in the temporary catching position, as shown in Figure 15, the first avoiding portion 34a of the clip portion contact avoiding portion 34 provided on the rear wall 30b presses the second engagement protrusion 26 outward from inside. Thereby, the outer elastic contact arm 21a is displaced outward, and expansion of the distance between the pair of the elastic contact arms 21a is thus assisted. Then, the first avoiding portion 34a of the clip portion contact avoiding portion 34 releases the pressing of the second engagement protrusion 26 in the course of movement of the moving plate 30 from the temporary catching position to the final catching position. Thereby, narrowing the distance between the pair of elastic contact arm 21a is assisted.

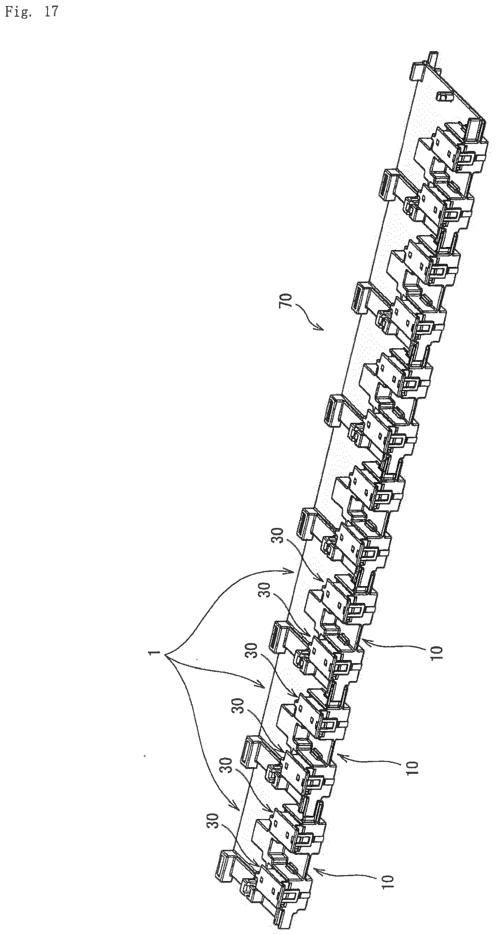

Next, a method for electrically connecting the plurality of batteries 50 to one another in series using the inter-battery connection device assembly 70 provided with a plurality of the inter-battery connection devices 1 thus constituted will be described. First of all, with the moving plate 30 of each inter-battery connection device 1 temporarily caught in the temporary catching position, as shown in Figure 16 and Figure 17, the housings 10 of the inter-battery connection devices 1 adjacent to each other of the plurality of inter-battery connection devices 1 are coupled to each other. Thereby, the inter-battery connection device assembly 70 is completed. In this embodiment, as shown in Figure 1, two sets of inter-battery connection device assemblies 70 are prepared. When the housings 10 of the inter-battery connection devices 1 adjacent to each other are coupled to each other, the coupling post 15 of the inter-battery connection device 1 is inserted from below into the coupling post receiving portion 16 of the inter-battery connection device 1 adjacent thereto to allow the engagement protrusion 15a to engage with the coupling post receiving portion 16.

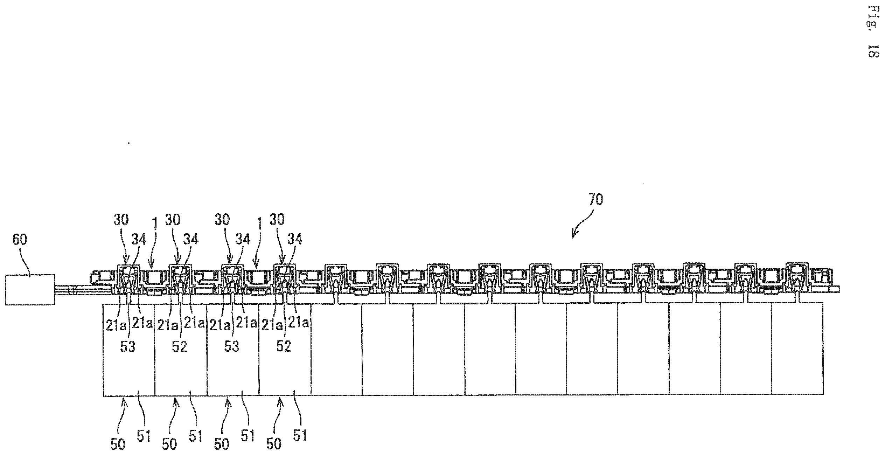

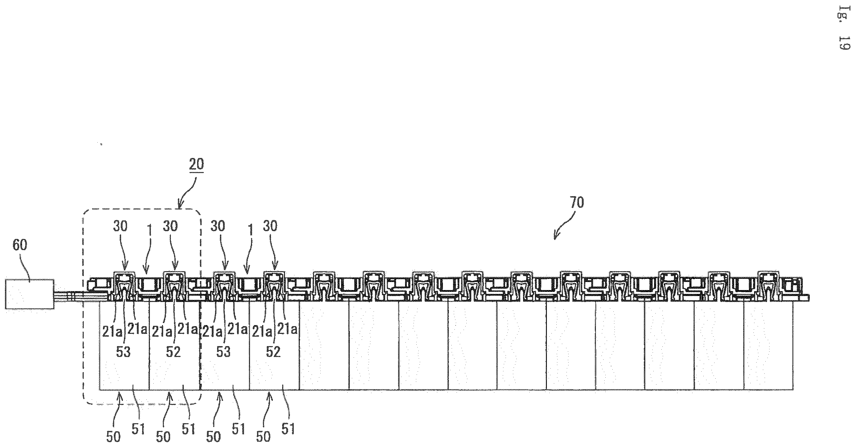

Next, as shown in Figure 18 and Figure 19, each inter-battery connection device assembly 70 is placed on the plurality of batteries 50 such that the first electrode terminal 52 or the second electrode terminal 53 gets into between the pair of elastic contact arms 21a of each inter-battery connection device 1. Here, the inter-battery connection device assemblies 70 located on one side (the inter-battery connection device assembly on the near side in Figure 1) will be described. Regarding the inter-battery connection device assembly 70, the second electrode terminal 53 of the battery 50 on the left most end gets into between one pair of elastic contact arms 21a of the inter-battery connection device 1 on the left most end, and the first electrode terminal 52 of the second battery 50 from the left gets into between the other pair of elastic contact arms 21a of the leftmost inter-battery connection device 1. Further, the second electrode terminal 53 of the third battery 50 from the left gets into between one pair of elastic contact arms 21a of the second inter-battery connection device 1 from the left, and the first electrode terminal 52 of the fourth battery 50 from the left gets into between the other pair of elastic contact arms 21a of said second inter-battery connection device 1. By repeating this, finally, the second electrode terminal 53 of the thirteenth battery 50 from the left gets into between one pair of elastic contact arms 21a of the seventh inter-battery connection device 1 from the left, and the first electrode terminal 52 of the fourteenth battery 50 from the left gets into between the other pair of elastic contact arms 21a of the seventh inter-battery connection device 1.

Further, the inter-battery connection device assembly 70 located on the other side (the inter-battery connection device assembly on the far side in Figure 1) will be described. Regarding this inter-battery connection device assembly 70, the second electrode terminal 53 of the second battery 50 from the left gets into between one pair of elastic contact arms 21a of the inter-battery connection device 1 on the left most end, and the first electrode terminal 52 of the third battery 50 from the left gets into between the other pair of elastic contact arms 21a of the leftmost inter-battery connection device 1. Further, the second electrode terminal 53 of the fourth battery 50 from the left gets into between one pair of elastic contact arms 21a of the second inter-battery connection device 1 from the left, and the first electrode terminal 52 of the fifth battery 50 from the left gets into between the other pair of elastic contact arms 21a of the second inter-battery connection device 1. By repeating this, finally, the second electrode terminal 53 of the twelfth battery 50 from the left gets into between one pair of elastic contact arms 21a of the sixth inter-battery connection device 1 from the left and the first electrode terminal 52 of the thirteenth battery 50 from the left gets into between the other pair of elastic contact arms 21a of the sixth inter-battery connection device 1.

Further, when the first electrode terminal 52 or the second electrode terminal 53 gets into between the pair of elastic contact arms 21a of each inter-battery connection device 1, the moving plate 30 of each inter-battery connection device 1 is in the temporary catching position. Therefore, the first avoiding portion 34a of the clip portion contact avoiding portion 34 is in a state of getting into between the first engagement protrusions 25 and the distance between the pair of elastic contact arms 21a is in an expanded state. Therefore, as shown in Figure 20, the first electrode terminal 52 or the second electrode terminal 53 is inserted into between the pair of elastic contact arms 21a without coming into contact with these elastic contact arms 21a.

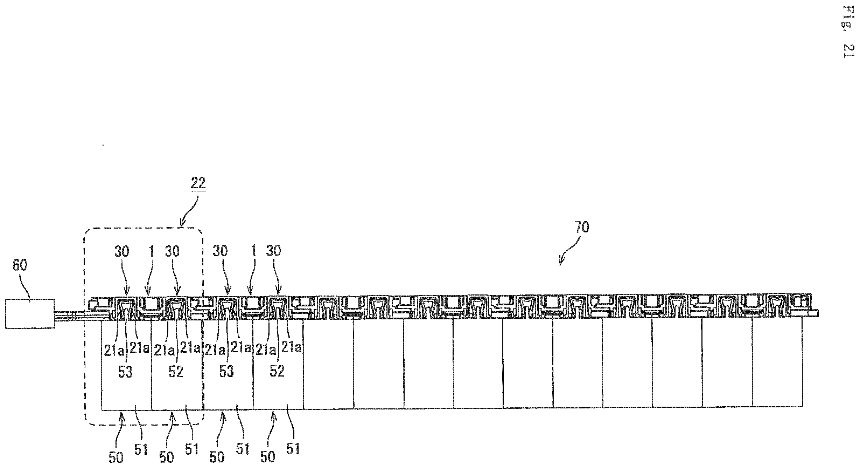

Thereafter, as shown in Figure 21, each moving plate 30 is moved downward to be moved from the temporary catching position to the final catching position. At this time, the final catching arm 32 of each moving plate 30 gets over the catching protrusion 13 of the housing 10 so that the catching protrusion 13 gets into the final catching hole 32a of the final catching arm 32. Here, the first avoiding portion 34a of the clip portion contact avoiding portion 34 gets out from between the first engagement protrusions 25 in the course of movement of each moving plate 30 from the temporary catching position to the final catching position. Thereby, the distance between the pair of elastic contact arms 21a is narrowed, and as shown in Figure 22, the pair of elastic contact arms 21a come into contact with the first electrode terminal 52 or the second electrode terminal 53. Thereby, the first electrode terminal 52 of one battery 50 of the batteries 50 adjacent to each other and the second electrode terminal 53 of the other battery 50 are electrically connected to each other via the bus bar 20.

Thus, when each moving plate 30 is in the temporary catching position, contact of the pair of elastic contact arms 21a of the clip portion 21 with the first electrode terminal 52 or the second electrode terminal 53 is avoided by the clip portion contact avoiding portion 34. Then, the clip portion contact avoiding portion 34 allows the pair of elastic contact arms 21a of the clip portion 21 to come into contact with the first electrode terminal 52 or the second electrode terminal 53 in the course of moment of each moving plate 30 from the temporary catching position to the final catching position. Therefore, connection between the first electrode terminal 52 and the second electrode terminal 53 of the batteries 50 adjacent to each other can be achieved with small operation force.

On the other hand, each moving plate 30 is not only attached to the housing 10 so as to be movable between the temporary catching position and the final catching position, but also temporarily caught on the housing 10 in the temporary catching position, and finally caught on the housing 10 in the final catching position. Therefore, the moving plate 30 as an operation part used during connection work between the first electrode terminal 52 and the second electrode terminal 53 of the batteries 50 is prevented from being lost.

Accordingly, connection between the first electrode terminal 52 and the second electrode terminal 53 of the batteries 50 adjacent to each other can be reliably achieved with small operation force without losing the operation part used during connection work between the first electrode terminal 52 and the second electrode terminal 53. Further, since the pair of elastic contact arms 21a of the clip portion 21 come into contact with the first electrode terminal 52 or the second electrode terminal 53 without sliding thereon, the clip portion 21, and the first electrode terminal 52 and the second electrode terminal 53 are prevented from being damaged by the sliding.

Here, each clip portion 21 is provided with the pair of elastic contact arms 21a receiving and coming into contact with the first electrode terminal 52 or the second electrode terminal 53 constituted of the male-type tab terminal therebetween. Further, the clip portion contact avoiding portion 34 is provided with the first avoiding portion 34a constituted of a protrusion having a width larger than a plate thickness of the tab terminal. Then, when the moving plate 30 is in the temporary catching position, the first avoiding portion 34a gets into between the pair of elastic contact arms 21a to expand the distance between the pair of elastic contact arms 21a, which results in avoidance of contact of the pair of elastic contact arms 21a with the first electrode terminal 52 or the second electrode terminal 53. Further, the first avoiding portion 34a gets out from between the pair of elastic contact arms 21a in the course of movement of the moving plate 30 from the temporary catching position to the final catching position. As a result, the first avoiding portion 34a allows the distance between the pair of elastic contact arms 21a to narrow so that the pair of elastic contact arms 21a are brought into contact with the first electrode terminal 52 or the second electrode terminal 53. By doing so, the function of the clip portion contact avoiding portion 34 can be realized with such simple structures of the clip portion 21 and the clip portion contact avoiding portion 34.

Further, the first engagement protrusions 25 are provided on the respective side edges of the front sides of the pair of elastic contact arms 21a, and when the moving plate 30 is in the temporary catching position, the first avoiding portion 34a of the clip portion contact avoiding portion 34 gets in between the pair of first engagement protrusions 25. Thereby, the distance between the pair of elastic contact arms 21a is expanded, which results in avoidance of contact of the pair of elastic contact arms 21a with the first electrode terminal 52 or the second electrode terminal 53. Further, the first avoiding portion 34a of the clip portion contact avoiding portion 34 provided on the front wall 30a gets out from between the first engagement protrusions 25 in the course of movement of the moving plate 30 from the temporary catching position to the final catching position. Thereby, the distance between the pair of elastic contact arms 21a is narrowed, which results in contact of the pair of elastic contact arms 21a with the first electrode terminal 52 or the second electrode terminal 53. Thus, the clip portion contact avoiding portion 34 gets into and out from between the first engagement protrusions 25 provided on the respective side edges of the pair of elastic contact arms 21a. Therefore, since movement of the clip portion contact avoiding portion 34 does not overlap with the first electrode terminal 52 or the second electrode terminal 53 in the upward and downward directions, the clip portion 21 can be reduced in height.

In addition, when the moving plate 30 is in the final catching position, as shown in Figure 22, the upper faces of the front wall 12a, the rear wall 12b and both the side walls 12c of the clip portion receiving portion 12 are flush with the upper face of the moving plate 30. Therefore, a worker can easily recognize that the moving plate 30 has reached the final catching position. The embodiment of the present invention have been described above, but the present invention is not limited to this embodiment and it can be modified and improved variously.

For example, as long as each clip portion 21 of the bus bar 20 comes into contact with the first electrode terminal 52 or the second electrode terminal 53, it is not necessarily required to be constituted of a pair of elastic contact arms 21a. Further, when the moving plate 30 is in the temporary catching position, the clip portion contact avoiding portion 34 avoids contact of the clip portion 21 with the first electrode terminal 52 or the second electrode terminal 53. Then, the clip portion contact avoiding portion 34 allows the clip portion 21 to come into contact with the first electrode terminal 52 or the second electrode terminal 53 in the course of movement of the moving plate 30 from the temporary catching position to the final catching position. As long as this requirement is satisfied, the shape of the clip portion contact avoiding portion 34 is not limited to the illustrated shape.

Furthermore, the clip portion contact avoiding portion 34 is not limited to getting into and out from between the pair of first engagement protrusions 25, but may get into and out from between the pair of elastic contact arms 21a. Further, a pair of engagement protrusions may be formed on the side edges of the rear sides of the pair of elastic contact arms 21a so that the clip portion contact avoiding portion 34 gets into and out from between these engagement protrusions. Further, in each inter-battery connection device 1, the two moving plates 30 may be constituted integrally. In addition, in each inter-battery connection device assembly 70, the plurality of housings 10 in the plurality of inter-battery connection devices 1 may be formed integrally.

### Reference Signs List

- 1: inter-battery connection device
- 10: housing
- 20: bus bar
- 21: clip portion
- 21a: elastic contact arm
- 25: first engagement protrusion (engagement protrusion)
- 22: coupling portion
- 30: moving plate (movable member)
- 34: clip portion contact avoiding portion
- 50: battery
- 52: first electrode terminal (electrode terminal)
- 53: second electrode terminal (electrode terminal)
- 70: inter-battery connection device assembly

## Claims

1. An inter-battery connection device for connecting electrode terminals of batteries adjacent to each other, comprising a housing, a bus bar attached to the housing, and a movable member, wherein
the bus bar is a conductive metal member for connecting two of the electrode terminals of the batteries adjacent to each other, and comprises two clip portions for coming into contact with the two of the electrode terminals, respectively, and a coupling portion coupling the two clip portions to each other, wherein
the movable member is attached to the housing so as to be movable between a temporary catching position and a final catching position, and is configured to temporarily catch the housing in the temporary catching position and is configured to finally catch the housing in the final catching position, and wherein
the movable member is provided with a clip portion contact avoiding portion for avoiding contact of the clip portion with the electrode terminal when the movable member is in the temporary catching position and allowing the clip portion to come into contact with the electrode terminal in the course of movement of the movable member from the temporary catching position to the final catching position.

2. The inter-battery connection device according to claim 1, wherein
the movable member comprises two movable members,
each of the two movable members is attached to the housing so as to be movable between the temporary catching position and the final catching position, and is configured to temporarily catch the housing in the temporary catching position and is allowed to finally catch the housing in the final catching position, and
each of the two movable member is provided with the clip portion contact avoiding portion.

3. The inter-battery connection device according to claim 1 or 2, wherein
each of the two of the clip portions comprises a pair of elastic contact arms configured to receive and come into contact with the electrode terminal constituted of a male-type tab terminal between the pair of elastic contact arms, and
the clip portion contact avoiding portion is constituted of a protrusion having a portion larger in width than a plate thickness of the tab terminal, and the clip portion contact avoiding portion gets into between the pair of elastic contact arms when the movable member is in the temporary catching position, thereby expanding a distance between the pair of elastic contact arms to avoid contact of the pair of elastic contact arms with the electrode terminal, and the clip portion contact avoiding portion gets out from between the pair of elastic contact arms in the course of movement of the movable member from the temporary catching position to the final catching position, thereby narrowing the distance between the pair of elastic contact arms to allow the pair of elastic contact arms to come into contact with the electrode terminal.

4. The inter-battery connection device according to claim 3, wherein
a pair of engagement protrusions are provided on respective side edges of the pair of elastic contact arms, and the clip portion contact avoiding portion gets into between the pair of engagement protrusions when the movable member is in the temporary catching position, thereby expanding the distance between the pair of elastic contact arms to avoid contact of the pair of elastic contact arms with the electrode terminal, and the clip portion contact avoiding portion gets out from between the engagement protrusions in the course of movement of the movable member from the temporary catching position to the final catching position, thereby narrowing the distance between the pair of elastic contact arms to allow the pair of elastic contact arms to come into contact with the electrode terminal.

5. An inter-battery connection device assembly provided with a plurality of the inter-battery connection devices according to any one of claims 1 to 4, wherein the housings of inter-battery connection devices adjacent to each other in the plurality of the inter-battery connection devices are coupled to each other.

6. The inter-battery connection device assembly according to claim 5, wherein a plurality of housings of the plurality of inter-battery connection devices are formed integrally.
